# EUROPEAN PATENT APPLICATION

(11) **EP 1 255 266 A1**
(43) Date of publication of application: **06.11.2002**
(21) Application number: 02253067.9
(22) Date of filing: 30.04.2002
(51) Int. Cl.: H01H 47/00

(54) **Bus controlled relays**

(30) Priority: 04.05.2001 GB 0110948
(71) Applicant: Tyco Electronics AMP GmbH, 64625 Bensheim (DE)
(72) Inventor: Polese, Angelo, 14612 Falkensee (DE); Berndt, Ernst-Ulrich, 13469 Berlin (DE)
(74) Representative: Warren, Keith Stanley

(57) **Abstract**

In order to exchange data with a relay (1), a data exchange module (20) is inserted in the control line (11) connecting the relay (1) and its control unit (10). The data exchange module (20) is connected to a data exchange device (22) via a data exchange line (21). The module (20) may be inserted into the relay base in which the control line (11) is integrated. The data exchange may be optionally implemented through an infra-red interface.

## Description

The present invention relates to providing bus control for relays and, more particularly, to a method of monitoring and/or controlling a relay, a module for exchanging data with a relay and a relay provided with such a module.

Relays are widely used in numerous applications. In many of those applications there is a need to monitor the functioning of the relay and, if necessary, to influence or correct its functioning as the need arises. Relays are normally connected to a control unit, which may include a simple switch or a more complicated device. Most traditional control units, however, are not designed to provide status information of the associated relay to a remote computer or a similar monitoring device. Likewise, these traditional control units normally do not allow remote control by such a monitoring device.

To allow the remote monitoring and/or controlling of relays it is, of course, possible to modify or replace each control unit. This is, however, expensive and laborious.

It is, therefore, an object of the present invention to overcome these disadvantages and provide a method of monitoring and/or controlling a relay or a plurality of relays which does not require the existing relay control units to be replaced and/or modified.

It is a further object of the present invention to provide means for monitoring and/or controlling a relay.

It is a yet further object of the present invention to provide a relay which is capable of being remotely monitored and/or controlled.

Accordingly, the present invention consists in a method of monitoring and/or controlling a relay having an excitation coil operating an electrical switch. The relay is connected to a control unit via a control line. The method comprises the steps of providing a data exchange module connected to a data exchange line, inserting the module in the control line, connecting the data exchange line to a data exchange device capable of transmitting and/or receiving data, and transmitting data to the relay and/or receiving data from the relay via the data exchange module and the data exchange line.

By inserting a data exchange module in the control line between the relay and its control unit, it is possible to receive data from the control line, allowing a monitoring of the control line and thus of the relay. It is also possible to feed data into the control line, thus controlling the relay, via the data exchange module, and possibly overriding any control signals originating from the control unit. As the data exchange module is connected to a data exchange line, remote monitoring and/or control by a (remote) data exchange device is possible.

The method of the invention does not require the relay's control unit to be modified. Still, additional control functions may be provided through the data exchange module.

The present invention also consists in a module for exchanging data with a relay via a control line connected to the relay, the module comprising a first connection for connecting the module to the control line, a second connection for connecting the module to a data exchange line, a data transmission device for transmitting data to the data exchange line, and/or a data reception device for receiving data from the data exchange line. In addition, the present invention consists in a relay provided with such a module.

The present invention further consists in a system for monitoring and/or controlling at least one relay connected to a control unit via a control line, the system including at least one data exchange module, at least one data exchange line capable of being connected to at least one data exchange module, and at least one data exchange device capable of being connected to a data exchange line and of transmitting and/or receiving data.

The invention will be further explained below with reference to the accompanying drawings in which:
Figure 1 schematically shows a relay circuit according to the prior art.
Figure 2 schematically shows a relay circuit according to the present invention.
Figure 3 schematically shows, in perspective, an arrangement of relays according to the present invention.
Figure 4 shows a schematic diagram of a data exchange module of the present invention.
Figure 5 shows a schematic circuit diagram of a data exchange module according to the present invention.

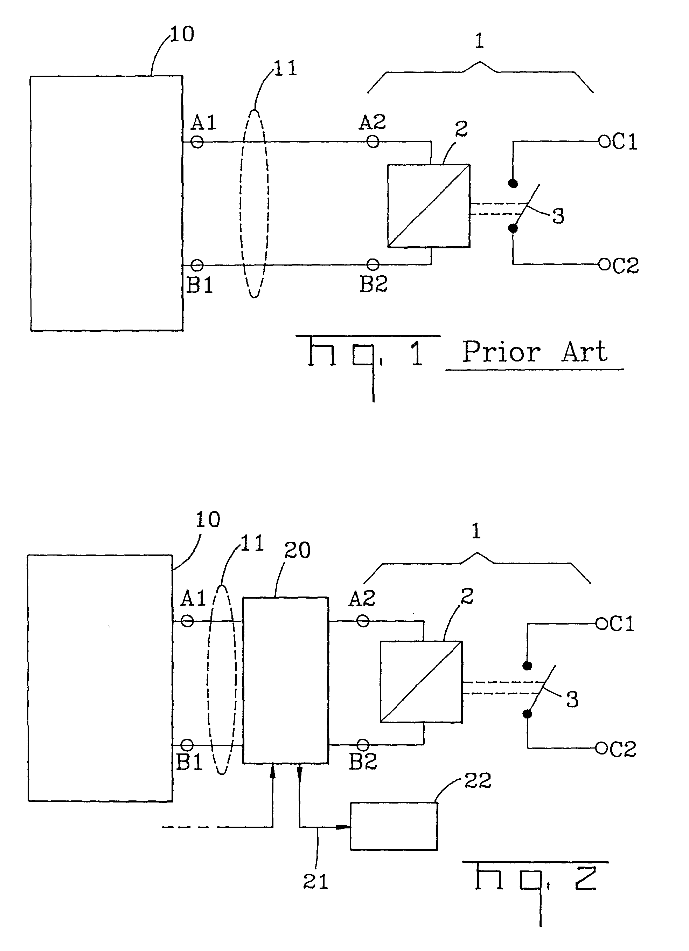

The prior art relay circuit schematically shown in Fig. 1 comprises a relay 1, of which only the excitation coil 2 and the electrical switch 3 are shown for the sake of clarity of the drawing. In practice, the relay will include an anchor on which electrical contacts are mounted, which contacts are part of the electrical switch shown.

The excitation coil 2 is connected to a control unit 10 by a control line 11. For this purpose the control unit 10 has terminals A1 and B1 which are connected by the respective wires of the control line 11 with terminals A2 and B2 of the relay 1. The control unit 10 may be an existing conventional control unit and may, for instance, be as simple as a hand-operated switch.

A load (not shown) may be connected to the terminals C1 and C2 of the switch 3 which is operated by the excitation coil 2.

Although a relay circuit of this kind may be adequate for many applications, it is normally not possible to control and/or monitor the relay 1 by means of a computer without replacing the control unit 10. It will be evident that such a replacement is expensive and, therefore, generally undesirable. Still, it is often advantageous to be able to (remotely) monitor the relays, for instance, for safety reasons. In addition, it may be desirable to override the control 10 in certain circumstances. It would, therefore, be very advantageous to be able to connect the relay 1 to a data bus or similar structure without having to replace the control unit 10.

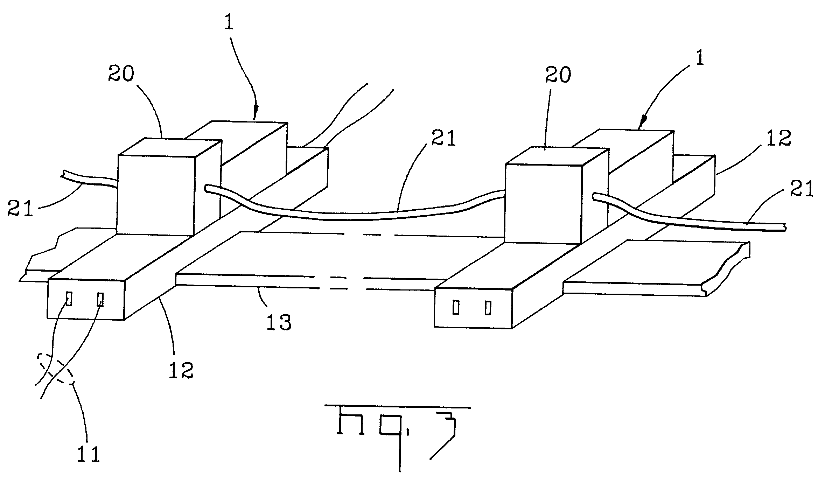

An exemplary embodiment of a relay circuit according to the present invention is shown in Fig. 2. Here, a data exchange module 20 is inserted in the control line 11. As a result, the control unit 10, the data exchange module 20 and the relay 1 are connected in series wherein all signals exchanged between the control unit 10 and the relay 1 pass through the module 20.

The module 20 is connected to a data exchange line 21 which may be a serial or parallel bus. In a preferred embodiment, the data exchange line 21 is suitable for transmitting infra-red light and may, therefore, contain one or more optical fibres.

Several modules 20 may be connected in series to a single data exchange line 21, each module being associated with a relay 1. In turn, several data exchange lines 21 may be connected in parallel to a single data exchange device 22. In this way, a plurality of modules 20 may be connected to a single data exchange device 22.

The data exchange device 22 is, preferably, a computer provided with a suitable interface, for example, an infra-red serial interface operating in accordance with the well-known RS232 protocol.

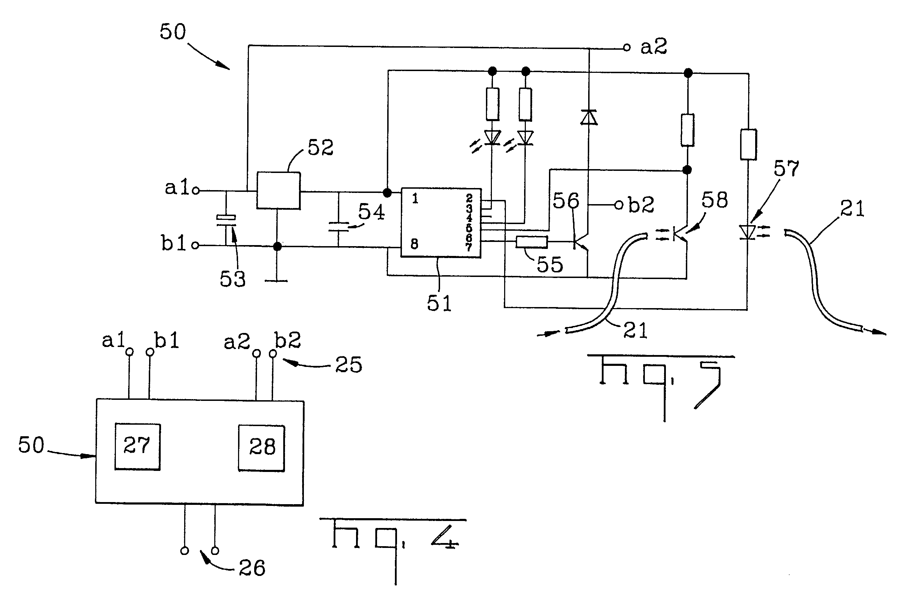

An example of a relay arrangement in which the present invention is applied is shown in Fig. 3. Two relays 1 are each mounted on a base or socket 12. The bases 12 are, in turn, mounted on a support rail 13. In each base 12, a data exchange module 20 according to the present invention is inserted. The modules 20 are both connected to a data exchange line 21 which is, in the embodiment shown, an optical fibre cable.

A control line 11 links the relay bases 12 with a control unit (not shown) and a power supply (not shown).

In the embodiment shown, the control lines are integrated in the relay bases 12. The bases 12 each have openings for receiving contact pins of the relays 1, allowing a relay 1 to be plugged into a base 12 without the need for separately connecting wiring. The invention preferably utilises two pairs of unused openings to accommodate the four terminals of the module 20.

The generic circuit 50 of the module 20, schematically shown in Fig. 4, comprises a connection 25 for connecting the module to the control line 11, a coupling 26 for coupling the module 20 to a data exchange line 21, a data transmission device 27 for transmitting data to the data exchange line 21, and/or a data reception device 28 for receiving data from the data exchange line.

The circuit diagram of Fig. 5 shows a preferred embodiment of the electrical circuit of a module 20 according to the present invention. The circuit 50 comprises a group 25 off our terminals a1, a2, b1 and b2 which are to be connected to the terminals A1, A2, B1 and B2 in Figs. 2, respectively. As can be seen, terminal a1 is directly coupled to terminal a2. An integrated circuit 51 receives an input signal from the terminal pair a1-b1, via a voltage regulator 52. A first capacitor 53 and a second capacitor 54, arranged on either side of the voltage regulator 52 serve to dampen any transients.

The integrated circuit 51 is preferably a commercially available PIC 12C 509 control circuit. One of its terminals is connected, via a first resistor 55, to the base of a transistor 56. The collector of transistor 56 is connected to terminal b2.

Another output of integrated circuit 51 is connected to the collector of a phototransistor 58. This phototransistor 58 becomes conductive upon receiving (infra-red) light emitted by a free end 26a of the fibre optic data exchange line 21. As a result, the phototransistor 58 provides a first optical coupling between the data exchange line 21 and the circuit 50, allowing the circuit 50 to receive data from the line.

Yet another output of integrated circuit 51 is connecting to a photodiode 57 which emits (infra-red) light when activated. This light is received by a free end 26b of the fibre optic data exchange line 21. As a result, the photodiode 58 provides a second optical coupling between the data exchange line 21 and the circuit 50, allowing the circuit 50 to transmit data to the line.

It will be understood by those skilled in the art that the present invention is not limited to the embodiments shown and that many additions and modifications are possible without departing from the scope of the present invention, as defined in the appended claims.

## Claims

1. A method of monitoring and/or controlling a relay (1) comprising an excitation coil (2) operating an electrical switch (3), the relay (1) being connected to a control unit (10) via a control line (11), the method comprising the steps of:
providing a data exchange module (20) connected to a data exchange line (21),
inserting the module (20) in the control line (11),
connecting the data exchange line (21) to a data exchange device (22) capable of transmitting and/or receiving data, and
transmitting data to the relay (1) and/or receiving data from the relay via the data exchange module (20) and the data exchange line (21).

2. The method according to claim 1, wherein the relay (1) is mounted on a base (12) through which the control line (11) passes, and wherein the module (20) is inserted in the base (12).

3. The method according to claim 1 or 2, wherein the data exchange device (22) both transmits and receives data.

4. The method according to any one of the preceding claims, wherein the exchange of data is effected through infra-red light.

5. The method according to any one of the preceding claims, wherein a plurality of modules (20) is connected to the data exchange line (21) so as to monitor and/or control a plurality of relays (1).

6. A module (20) for exchanging data with a relay (1) via a control line (11) connected to the relay (1), the module comprising:
a connector (25) for connecting the module to the control line (11),
a coupling (26) for coupling the module to a data exchange line (21),
a data transmission device (27) for transmitting data to the data exchange line (21), and/or
a data reception device (28) for receiving data from the data exchange line.

7. The module according to claim 6, including a controller (30) for controlling the data transmission device (27) and/or the data reception device (28).

8. The module according to claim 6 or 7, wherein the data transmission device (27) comprises an infrared light emitting diode (57).

9. The module according to claim 6, 7 or 8, wherein the data reception device (28) comprises a light sensitive transistor (58).

10. A system for monitoring and/or controlling at least one relay (1) connected to a control unit (10) via a control line (11), the system comprising:
at least one data exchange module (20),
at least one data exchange line (21) capable of being connected to the at least one data exchange module (20), and
at least one data exchange device (22) capable of being connected to a data exchange line (21) and of transmitting and/or receiving data.

11. The system according to claim 10, including a plurality of data exchange modules (20).

12. The system according to claim 10 or 11, including a relay (1) provided with the or each data exchange module (20).
